(19)

Europäisches Patentamt
European Patent Office
Office européen des brevets

(11) **EP 2 147 518 B1**

(12) **EUROPEAN PATENT SPECIFICATION**

(45) Date of publication and mention
of the grant of the patent:
**19.11.2014 Bulletin 2014/47**

(21) Application number: **07872888.8**

(22) Date of filing: **08.05.2007**

(51) Int Cl.:
*H04L 9/08* (2006.01)          *H04L 9/12* (2006.01)
*H04L 29/06* (2006.01)          *H04L 9/32* (2006.01)

(86) International application number:
**PCT/US2007/011125**

(87) International publication number:
**WO 2008/140442 (20.11.2008 Gazette 2008/47)**

(54) **Method and apparatus for adjusting decryption keys**

Verfahren und Vorrichtung zum Einstellen von Entschlüsselungsschlüsseln

Procédé et appareil pour ajuster des clés de décryptage

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**27.01.2010 Bulletin 2010/04**

(73) Proprietor: **Thomson Licensing
92130 Issy-les-Moulineaux (FR)**

(72) Inventor: **REDMANN, William, Gibbens
Glendale, CA 91205 (US)**

(74) Representative: **Esselin, Sophie et al
Marks & Clerk France
Conseils en Propriété Industrielle
Immeuble Visium
22, Avenue Aristide Briand
94117 Arcueil Cedex (FR)**

(56) References cited:
**EP-A- 0 635 790          EP-A- 1 768 303
US-A1- 2004 052 377**

**Description**

TECHNICAL FIELD

This invention relates to keys used to decrypt content, such as a digital cinema presentation.

BACKGROUND ART

Today, a growing number of motion picture theaters now display content in digital form, rather than in analog form (e.g., film). A typical digital cinema system in an exhibition venue (e.g., a motion picture theater) comprises a Media Block for decrypting digital motion picture content for subsequent display. The Media Block performs the decryption using decryption keys associated with the content. The Society of Motion Picture and Television Engineers (SMPTE) has published Standard 430-1 Digital Cinema Operations Key Distribution Message (KDM) that describes a KDM.message that serves as a key for decrypting previously encrypted digital cinema content. The KDM message has a validity interval defined by entries in the *Not ValidBefore* and *Not ValidAfter* fields whose entries are repeated for non-authoritative human readability in the *ContentKeysNotValidBefore* and *ContentKeysNotValidAfter* elements.

The Media Block includes a Secure Clock set at the time of manufacture. The Secure Clock should not drift by more than 5 minutes per year, the presently allowed threshold. The Secure Clock of the Media Block serves as the mechanism for evaluating the usability of keys with respect to their validity interval. If the current time and date, as determined by the Secure Clock within the Media Block, lies outside the validity interval of the key, then the Media Block will refuse to use that key to decrypt content. (The Media Block can use another key to decrypt the same content, even if the key has a different validity interval, as long as the that validity interval remains current, that is, the interval overlaps the present time.)

At times near the beginning and end of a key's validity interval, the accuracy of the Secure Clock becomes critically important. If the Secure Clock has drifted by fifteen or twenty minutes several years after manufacture, the Media Block could lack the ability to successfully deliver a performance of a newly released movie at a given time. For example, assume that a theater has a scheduled screening of a particular digital cinema presentation at midnight and possesses a key whose validity expires just after that time. Thus, a show scheduled to start at 12:01 AM, even with ten or fifteen minutes of trailers, probably would not undergo playout at 12:15 AM, disrupting the scheduled performance.

Thus, a need exists for a technique that accommodates for the drift of a Secure Clock in a Media Block.

EP 1 768 303 A1 teaches to adjust the secure clock of a Play-back device to compensate for the drift.

BRIEF SUMMARY OF THE INVENTION

Briefly, in accordance with a preferred embodiment of the present principles, there is provided a method for accommodating for the drift in the Secure Clock of a Media Block in a Digital Cinema System, and a corresponding Digital Cinema system. The method and system as claimed comprise the step of adjusting a validity interval of a key for decrypting content in accordance with the time difference between a secure time value and a present time value.

BRIEF DESCRIPTION OF THE DRA WINGS

FIGURE 1 depicts a block schematic diagram of a digital cinema system for practicing the key adjustment technique of the present principles; and
FIGURE 2 depicts a method for adjusting the validity interval of a key in accordance with an illustrative embodiment of the present principles.

DETAILED DESCRIPTION

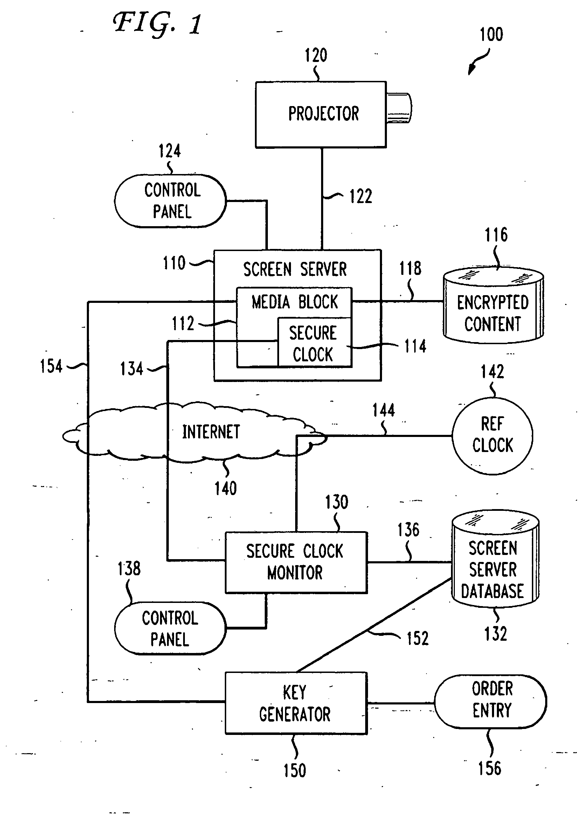

FIGURE 1 depicts an illustrative embodiment of a Digital Cinema System 100 of type typically found in a movie theater or similar exhibition facility for presenting content (e.g., movies) originally received in digital form. In practice, the Digital Cinema System 100 comprises Screen Server 110 which receives and decrypts encrypted content for delivery through a link 122 for receipt by a Projector 120 which serves to display the decrypted content on a screen (not shown). The Screen Server 110 comprises a Media Block 112 and a Secure Clock 114. The Media Block 112 performs content decryption in a well known manner using a key described hereinafter. For that reason, the Media Block 112 is secure and tamper-proof. As described in greater detail hereinafter, the Secure Clock 114 provides time and date information to the Media Block 112 for use connection with content decryption. Preferably, the Screen Server 110 has a control panel 124 to facilitate manual operation. Control of the Screen Server 110 can occur remotely through a Theatre Management System (TMS) or through a Network Operations Center (NOC) (not shown).

Screen Server 110 accesses encrypted content from a Database 116, which can exist internally within the screen server or external thereto as shown in FIG 1. If the Projector 120 and Media Block 112 do not reside together within a secure enclosure (not shown), the link 122 typically will make use of an independent encryption technique negotiated between the Projector and the Media Block to reduce the risk of the digital content being digitally copied.

A Key Generator 150 produces the key(s) employed by the Media Block 112 necessary for the presentation of encrypted content 116 in response to a order entry generated by an Order Entry Device 156, which can take the form of a human-operated terminal or an automated order collection and generation system. In practice, the Key generator 150 does not reside at the exhibition venue. The order entry received by the Key Generator 150 typically has a validity interval specified in the local time of the exhibition theatre, which defines when the key becomes effective and when the key expires. Normally, the Key Generator 150 generates keys whose validity interval is expressed in Greenwich Mean Time (GMT). To assure the proper offset from the local exhibition time contained in the order entry, the Key generator 150 typically accesses a Screen Server Database 132 over a connection 152, which is preferably secure, to determine the time zone offset associated with the target exhibition theatre.

Delivery of keys from the Key generator 150 to the Screen Server 110 for receipt by the Media Block 112 occurs over a Delivery Channel 154. The Delivery Channel 154 can take one of several different forms. In practice, the Delivery Channel 154 can comprise a wired link (including, but not limited to, metallic and/or fiber conductors) and/or a wireless link. The delivery channel 154 could also comprise a common carrier for delivery of one or more key-containing memories physically shipped to the exhibition theatre. A Theatre Management System (not shown) can comprise part of key delivery channel 154. Preferably, the Key Delivery Channel 154 comprises a network connection that traverses the Internet 140 or an alternate communication channel (not shown). Preferably, such a network connection takes the form of a Virtual Private Network (VPN) between the Key Generator 150 and the exhibition theatre. Alternatively, the Theater Management System can serve as an intermediary between the delivery of keys, regardless of delivery method, and the Screen Server 110.

In accordance with an illustrative embodiment of the present principles, a Secure Clock Monitor 130 monitors the Secure Clock 114 via a Clock Monitor Channel 134. As with the Key Delivery Channel 154, the Clock Monitor Channel 134 preferably comprises a network connection, which can pass through the Theater Management System to relay information about the Secure Clock 114 to the Secure Clock monitor 130. The Secure Clock Monitor 130 compares the time value of the Secure Clock 114 against the time value provided by a Reference Clock 142. In place of, or in addition to the Secure Clock Monitor 130 monitoring the Reference clock 142, the Secure Clock 114, the Screen Server 110, and/or the Theater Management System (not shown), could perform such monitoring.

Rather than comprise a single clock, the Reference Clock 142 could comprise a plurality of synchronized clocks. Access to the Reference Clock 142 can occur using the Network Time Protocol (NAP) to provide good quality synchrony of local clocks (not shown) when used as a proxy for the Reference Clock 142. Access to the Reference clock 142 typically exists through the Internet 140 via a connection 144. Those skilled in the art will recognize that a local clock maintaining synchronism with a Reference Clock (e.g., through NTP) can serve as the basis for comparison of the Secure Clock 114 to the Reference Clock 142. The Secure Clock Monitor 130 transmits the result of such a comparison over a link 136 to the Screen Server Database 132 for storage.

The Secure clock Monitor 130 preferably restricts the values entered into Screen Server database 132 by reading stored information concerning prior monitored values of Secure Clock 114. Such a restriction rule preferably includes a limitation such that a change in the offset to the Secure Clock 114 should not exceed a predetermined equivalent drift rate since the last update for the same clock. For example, assume that the anticipated maximum drift rate R will not exceed 300 seconds (five minutes) per year, and a policy P allows resetting the Secure Clock by up to 200% of the anticipated maximum drift rate. Then, if the time T since the last update is 1/12 of a year (one month), a maximum allowable change in the current offset for Secure Clock 114 should not exceed the value given by $R * P * T = 300 * 2.0 * 1/12$ which equals 50 seconds. An attempt to violate a restriction rule preferably gives rise to a warning, which an operator can override, but a record of the warning will remain.

The Secure Clock Monitor 130 also preferably tracks an identifier unique to the Media Block 112 or the Secure Clock 114, for instance, a cryptographic certificate. In this way, upon replacement of the Server 110 or the Media Block 112, the Secure Clock Monitor 130 can detect the presence of a different Secure Clock 114 and that a different rule might apply with regard to changing the offset of that clock in the digital cinema system 100.

Preferably, monitoring of the Secure Clock 114 by the Secure Clock Monitor 130 occurs over a network connection using the secure Simple Network Management Protocol version 3 (SNMPv3). Using this protocol allows the Media Block 112 or the Secure Clock 114 to authenticate responses to queries regarding the current time. However, those skilled in the art will recognize that numerous other protocols exist that provide authenticated communication suitable for ensuring that the Secure Clock 114 provides the reported time. Alternatively, if the response for the current time from the Secure Clock 114 lacks authentication but previous, trusted results reside in the Screen Server database 132, then a non-authenticated report can serve to update the Screen Server Database, provided the current reading does not violate any rules or policies for update, such as the examples given above.

In another embodiment, especially suitable for use if the Digital Cinema System 100 lacks a connection to the Internet 140 or other communication network, the Clock Monitor Channel 134 could comprise a human operator interrogating the Secure Clock 114 and reporting its value to Secure Clock Monitor 130 or a remote operator having an interface (not shown) and access to the Secure Clock Monitor. As before, so long as previous, trusted results reside in the Screen Server Database 132, then a manually provided report could serve to update the Screen Saver Database; provided the report does not violate any rules or policies for update. Preferably, the Secure Clock 114 can provide a terse, human readable report, for example to control panel 124, that includes a checksum that incorporates information regarding both the current reading and the Media Block 112 or Secure Clock 114 identity, to provide detectability of a mis-entered or mis-attributed entry through the Control Panel 124. Note that manual updates provided to the Secure Clock Monitor 130 through the control panel 124 likely will have poorer accuracy than automatically gathered readings. Different rules can exist for such lower accuracy readings as compared to those for automatic readings.

In an alternate embodiment (not shown), a Theater Management System could have responsibility for managing multiple digital cinema systems, for example all digital cinema systems at a single exhibition theatre. Under such circumstances, the Theater Management System would have access to each Secure Clock 114 for which it is responsible. Subsequently, the Theater Management System would interact with the Secure Clock Monitor 130 of each digital cinema system and transfer information concerning the accuracy and drift of each Secure Clock 114. Further, the Theater Management System MS could have direct or indirect access to the Reference Clock 142, for example using NTP, and could report to the Secure Clock Monitor 130 the current offset of each Secure Clock 114 relative to the Reference Clock 142.

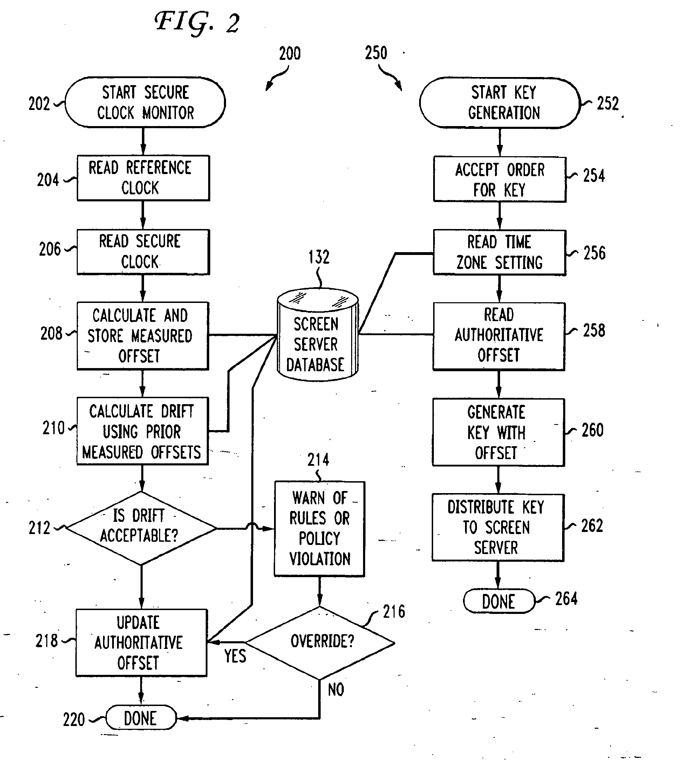

FIGURE 2 depicts in flow chart form the steps of a process 200 for monitoring (and adjusting when necessary) the Secure Clock 112 and a process 250 for adjusting (e.g., offsetting) a key to account for an offset in the Secure Clock. As described hereinafter, the Secure Clock Monitoring Process 200 provides the data stored in the Screen Server Database 132 of FIG. 1 used during the Key Adjustment Process 250.

The Secure Clock Monitoring Process 200 commences upon initiation (e.g., start-up) of the Secure Clock Monitor 130 of FIG. 1 during step 202 of FIG. 2. Such initiation can occur manually or upon the occurrence of an event (e.g., the receipt in an exhibition theatre of new content). Preferably, initiation of the Secure Clock Monitor 130 occurs on a scheduled, periodic basis (e.g., weekly). During step 204, reading of the Reference Clock 142 of FIG. 1 occurs, typically via NTP. Alternatively, reading of a clock having strong synchronization to Reference Clock 142 can occur during step 204. During step 206, the Secure Clock 114 of FIG, 1 is read. Preferably the interval between steps 204 and 206 is sufficiently small as to be negligible. Alternatively, the interval could have a finite known value, or be measured, in which case the interval would be added to the reading of the Reference Clock 142 obtained during step 204.

During step 208, the difference between offset of the Secure Clock 114 relative to the Reference Clock 142 is determined and the value is stored in Screen Server database 132 in conjunction with the reading of the Reference Clock 142 obtained during step 204. Alternatively, the reading of the Secure Clock 114 obtained during step 206 can undergo storage instead of the offset value since the offset value can be calculated at a later time.

During step 210, the rate of drift of the Secure Clock 114 of FIG. 1 can be computed using the current readings established during steps 206 and 208, of FIG. 2 and from prior readings obtained from the same Secure Clock 114 and previously recorded in Screen Server Database 132 of FIG. 1. As is well known in the art, the rate at which a clock drifts can be computed by dividing the difference between a later offset and an earlier offset by the amount of time elapsed between the two offsets in accordance with the following relationship:

$$drift = \frac{(s_2 - r_2) - (s_1 - r_1)}{(r_2 - r_1)} = \frac{(s_2 - s_1)}{(r_2 - r_1)} - 1$$

where $s_n$ and $r_n$ are the current values of the Secure Clock 114 and the Reference Clock 142, respectively, at corresponding readings $n$, respectively. If the values of $s$ and $r$ are in seconds, then the drift is measured in seconds of drift per second elapsed, which should not exceed $\pm 0.158\ \mu S$ per second (i.e., 5 seconds per year).

During step 212 of FIG. 2, the observed rate of drift undergoes an evaluation to determine acceptability. If the observed rate of drift falls outside acceptable limits, the process execution branches to step 214 during which generation of a warning occurs to indicate violation of the rule or policy associated with clock drift. During step 216, the operator has an opportunity to enter an override of the rule or policy violation. In the absence of an override, the process concludes during step 220. Upon finding the drift acceptable during step 212 or upon the occurrence of an override during step 216, then an update is made to the authoritative offset for the Secure Clock 114 and that value is stored in the Screen Server Database 132. Preferably, this update includes an annotation with pertinent forensic information, for example the identity of who authorized the override and why the override was made. After updating the authoritative offset, the Secure Clock Monitoring method 200 concludes at step 220.

Initiation of the Key Adjustment Process 250 commences upon execution of step 252 which occurs upon receipt of outstanding orders exist for key generation from the Order Entry device 156 of FIG.1. During step 254, acceptance of a key order occurs. The order typically includes sufficient information to identifying the Media Block 112 associated with the particular exhibition theater, the identity of the encrypted content 116, and details associated with the duration of the content presentation, often referred to as a "contract run." A typical contract run is has a start date and an end date or run duration, the later optionally being implied (i.e., a default of seven days). Additionally, the contract run information can include a start time, or other data for determining the validity interval. During step 256, an access is made to the Screen Server database 132 to determine the correct time zone setting of the target Media Block (i.e., media block 112), since the validity interval information typically associated with the key is specified in GMT. Although the key order can specify a particular Media Block, typically, the key order only specifies the exhibition theatre. Those skilled in the art will recognize that accessing the Screen Server database 132 with a specification of the target exhibition theatre permits ready identification of the Media Block 112, and information associated with the Media Block.

During step 258, an authoritative offset for Secure Clock 114 of FIG. 1 is retrieved from the Screen Saver database 132. If no offset value exists in the database, an offset of zero is presumed. During step 260, generation of a key for Media Block 112 to decrypt the encrypted content 116 occurs. The key will have a validity interval determined from the contract run or other interval described in the key order, but modified so that the key has a start time and an end time according to the time zone setting applicable to each, plus the authoritative offset. Additionally, if desired, an extrapolation of the authoritative offset can be made using the most recent or longer term drift. This becomes of significance if a long time has elapsed (e.g., a year or more) since Secure Clock monitor process 200 has been successful in monitoring a Secure Clock. Once generated during step 262, the key is distributed to Screen Server 100 during step 262. Offset key generation process 250 concludes during step 264.

The foregoing describes a process for both updating a secure clock, and for updating a key for content decryption in accordance with the secure clock offset.

## Claims

1. A method for use in a digital cinema system (100) in connection with digital cinema presentation comprising the step of:

   adjusting (258) at a secure clock monitor (130) of the digital cinema system a validity interval of a key for decrypting content in accordance with a time difference between a time value of a secure clock (114) within a screen server (110) of a digital cinema system and a current time value from a reference clock.

2. The method according to claim 1 wherein the adjusting step further comprises the steps of:

   reading (256) a secure clock to obtain the secure time value; and
   comparing (208) the secure to the current time value.

3. The method according to claim 1 wherein the adjusting step further comprises the steps of:

   determining (256) a time zone offset for a desired exhibition location; and
   converting the validity interval from Greenwich Mean Time to local time in accordance with the time zone offset.

4. The method of claim 1 wherein adjustment of the validity interval of the key commences upon acceptance (254) of an order to generate a key for content decryption.

5. The method according to claim 1 further comprising the step (262) of distributing the key following validity adjustment to media block that decrypts the content in accordance with the key.

6. Digital cinema system (100) for digital cinema presentation comprising:

   a secure clock (114) within a screen server (110) of the digital cinema system adapted to provide a secure time value for determining the time validity of a decryption key;
   a reference clock (142) adapted to provide a current time value; and
   a secure clock monitor (130) within the screen server of the digital cinema system adapted to monitor the secure clock via a clock monitor channel for establishing a time difference value between a secure time value of the secure clock and a current time value of the reference clock for adjusting a validity interval associated with the decryption key.

7. The digital cinema system according to claim 6 further comprising a database (132) adapted to store the time difference value.

8. The digital cinema system according to claim 6 further comprising a key generator (150) adapted to adjust the decryption key in accordance with the time difference value stored in the database.

## Patentansprüche

1. Verfahren zur Verwendung in einem digitalen Kinosystem (100) in Verbindung mit einer digitalen Kinovorführung, wobei das Verfahren die folgenden Schritte umfasst:

Einstellen (258) eines Gültigkeitsintervalls eines Schlüssels zum Entschlüsseln von Inhalt in Übereinstimmung mit einer Zeitdifferenz zwischen einem Zeitwert einer sicheren Uhr (114) innerhalb eines Vorführungsservers (110) eines digitalen Kinosystems und einem gegenwärtigen Zeitwert von einer Referenzuhr bei einer Überwachungseinrichtung (130) einer sicheren Uhr des digitalen Kinosystems.

2. Verfahren nach Anspruch 1, wobei der Schritt des Einstellens ferner die folgenden Schritte umfasst:

Ablesen (256) einer sicheren Uhr zum Erhalten des sicheren Zeitwerts; und
Vergleichen (208) des sicheren Zeitwerts mit dem gegenwärtigen Zeitwert.

3. Verfahren nach Anspruch 1, wobei der Schritt des Einstellens ferner die folgenden Schritte umfasst:

Bestimmen (256) eines Zeitzonenversatzes für einen gewünschten Vorführungsort; und
Umwandeln des Gültigkeitsintervalls von der Greenwicher Zeit in die Ortszeit in Übereinstimmung mit dem Zeitzonenversatz.

4. Verfahren nach Anspruch 1, wobei das Einstellen des Gültigkeitsintervalls des Schlüssels bei Annahme (254) einer Bestellung zum Erzeugen eines Schlüssels für die Inhaltsentschlüsselung beginnt.

5. Verfahren nach Anspruch 1, das ferner den Schritt (262) des Verteilens des Schlüssels nach der Gültigkeitseinstellung an den Medienblock, der den Inhalt in Übereinstimmung mit dem Schlüssel entschlüsselt, umfasst.

6. Digitales Kinosystem (100) für eine digitale Kinovorführung, wobei das digitale Kinosystem umfasst:

eine sichere Uhr (114) innerhalb eines Vorführungsservers (110) des digitalen Kinosystems, die dafür ausgelegt ist, einen sicheren Zeitwert zum Bestimmen der zeitlichen Gültigkeit eines Entschlüsselungsschlüssels bereitzustellen;
eine Referenzuhr (142), die dafür ausgelegt ist, einen gegenwärtigen Zeitwert bereitzustellen; und
eine Überwachungseinrichtung (130) der sicheren Uhr innerhalb des Vorführungsservers des digitalen Kinosystems,
die dafür ausgelegt ist, die sichere Uhr über einen Uhrüberwachungskanal zu überwachen, um einen Zeitdifferenzwert zwischen einem sicheren Zeitwert der sicheren Uhr und einem gegenwärtigen Zeitwert des Referenztakts festzusetzen, um ein dem Entschlüsselungsschlüssel zugeordnetes Gültigkeitsintervall einzustellen.

7. Digitales Kinosystem nach Anspruch 6, das ferner eine Datenbank (132) umfasst, die dafür ausgelegt ist, den Zeitdifferenzwert zu speichern.

8. Digitales Kinosystem nach Anspruch 6, das ferner einen Schlüsselgenerator (150) umfasst, der dafür ausgelegt ist, den Entschlüsselungsschlüssel in Übereinstimmung mit dem in der Datenbank gespeicherten Zeitdifferenzwert einzustellen.

**Revendications**

1. Procédé pour utilisation dans un système de cinéma numérique (100) dans le cadre d'une présentation de cinéma numérique comprenant l'étape suivante :

réglage (258), dans un système de contrôle d'horloge sécurisée (130) du système de cinéma numérique, d'un intervalle de validité d'une clé permettant de décrypter le contenu en fonction d'une différence temporelle entre une valeur temporelle d'une horloge sécurisée (114) d'un serveur d'écran (110) d'un système de cinéma numérique et une valeur temporelle courante d'une horloge de référence.

2. Le procédé selon la revendication 1, dans lequel l'étape de réglage comprend en outre les étapes suivantes :

lecture (256) d'une horloge sécurisée afin d'obtenir la valeur temporelle sécurisée ; et
comparaison (208) de la valeur sécurisée à la valeur temporelle courante.

3. Le procédé selon la revendication 1, dans lequel l'étape de réglage comprend en outre les étapes suivantes :

détermination (256) d'un décalage horaire pour un lieu de présentation souhaité et
conversion de l'intervalle de validité du temps moyen de Greenwich en heure locale en fonction du décalage horaire.

4. Le procédé de la revendication 1, dans lequel le réglage de l'intervalle de validité commence suite à l'acceptation (254) d'un ordre de génération d'une clé de décryptage du contenu.

5. Le procédé selon la revendication 1, comprenant en outre l'étape (262) de distribution de la clé après le réglage de la validité au bloc média qui décrypte le contenu en fonction de la clé.

**6.** Système de cinéma numérique (100) pour une présentation de cinéma numérique comprenant :

une horloge sécurisée (114) dans un serveur d'écran (110) du système de cinéma numérique adapté à fournir une valeur temporelle sécurisée pour déterminer la validité temporelle d'une clé de décryptage ;
une horloge de référence (142) adaptée à fournir une valeur temporelle courante ; et
un système de surveillance d'horloge sécurisée (130) dans le serveur d'écran du système de cinéma numérique adapté à contrôler l'horloge sécurisée grâce à un canal de surveillance d'horloge, pour établir une valeur de différence temporelle entre une valeur temporelle sécurisée de l'horloge sécurisée et une valeur temporelle courante de l'horloge de référence pour régler un intervalle de validité associé à la clé de décryptage.

**7.** Système de cinéma numérique selon la revendication 6 comprenant en outre une base de données (132) adaptée à stocker la valeur de différence temporelle.

**8.** Système de cinéma numérique selon la revendication 6 comprenant en outre un générateur de clé (150) adapté à régler la clé de décryptage, en fonction de la valeur de différence temporelle stockée dans la base de données.

# FIG. 1

100

120

**PROJECTOR**

124

**CONTROL PANEL**

122

116

110 — **SCREEN SERVER**

118

**MEDIA BLOCK**

112

**SECURE CLOCK**

114

**ENCRYPTED CONTENT**

154

134

**INTERNET**

140

142

144

**REF CLOCK**

130

136

**SECURE CLOCK MONITOR**

**SCREEN SERVER DATABASE**

138

**CONTROL PANEL**

152

132

**KEY GENERATOR**

**ORDER ENTRY**

150

156

# FIG. 2

200

250

```
202 ──( START SECURE
         CLOCK MONITOR )

         │
         ▼
204 ──┌─────────────┐
      │ READ REFERENCE │
      │    CLOCK      │
      └─────────────┘
         │
         ▼
206 ──┌─────────────┐
      │ READ SECURE  │
      │   CLOCK      │
      └─────────────┘
         │
         ▼
208 ──┌──────────────┐
      │ CALCULATE AND │
      │ STORE MEASURED │
      │   OFFSET      │
      └──────────────┘
         │
         ▼
210 ──┌──────────────┐
      │ CALCULATE DRIFT │
      │ USING PRIOR   │
      │ MEASURED OFFSETS │
      └──────────────┘
         │
         ▼
212 ── IS DRIFT
       ACCEPTABLE?
```

132
SCREEN SERVER DATABASE

214
WARN OF RULES OR POLICY VIOLATION

216 OVERRIDE?

218 ── UPDATE AUTHORITATIVE OFFSET

220 ── DONE

YES

NO

```
252 ──( START KEY
         GENERATION )
         │
         ▼
254 ──┌─────────────┐
      │ ACCEPT ORDER │
      │  FOR KEY     │
      └─────────────┘
         │
         ▼
256 ──┌─────────────┐
      │ READ TIME    │
      │ ZONE SETTING │
      └─────────────┘
         │
         ▼
258 ──┌─────────────┐
      │ READ         │
      │ AUTHORITATIVE │
      │ OFFSET       │
      └─────────────┘
         │
         ▼
260 ──┌─────────────┐
      │ GENERATE     │
      │ KEY WITH     │
      │ OFFSET       │
      └─────────────┘
         │
         ▼
262 ──┌─────────────┐
      │ DISTRIBUTE KEY │
      │ TO SCREEN    │
      │ SERVER       │
      └─────────────┘
         │
         ▼
264 ──( DONE )
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1768303 A1

**Non-patent literature cited in the description**

- The Media Block performs the decryption using decryption keys associated with the content. Standard 430-1 Digital Cinema Operations Key Distribution Message (KDM). The Society of Motion Picture and Television Engineers